# EUROPÄISCHE PATENTSCHRIFT

(11) **EP 3 566 850 B1**
(45) Veröffentlichungstag und Bekanntmachung des Hinweises auf die Patenterteilung: **15.12.2021**
(21) Anmeldenummer: 18171095.5
(22) Anmeldetag: 07.05.2018
(51) Int. Cl.: B29C 48/09, B29C 48/25, B29C 48/30, B29C 48/32, B29C 49/04

(54) **MEHRFACHEXTRUSIONSKOPF**
MULTIPLE EXTRUSION HEAD
TÊTE DE MULTI-EXTRUSION

(43) Veröffentlichungstag der Anmeldung: 13.11.2019
(73) Patentinhaber: W. Müller GmbH, 53842 Troisdorf (DE)
(72) Erfinder: LANG, Klaus, 53797 Lohmar (DE)
(74) Vertreter: Neumann Müller Oberwalleney & Partner Patentanwälte

(56) Entgegenhaltungen:
- EP-A2- 2 011 625
- WO-A1-2007/115921
- DE-U1-202010 000 096
- JP-U- S51 150 267
- US-A- 5 102 602

## Beschreibung

Die Erfindung betrifft einen Mehrfachextrusionskopf zum Herstellen von Vorformlingen aus thermoplastischem Kunststoff. Der Mehrfachextrusionskopf umfasst ein ortsfest angeordnetes Basisgestell und mehrere Extrusionsköpfe, die am Basisgestell angeordnet sind. Jeder der mehreren Extrusionsköpfe weist einen Masseeingang für einen von einem Extruder geförderten Materialstrom aus plastifiziertem Kunststoff, eine Ringdüse zum Bilden einer schlauchförmigen Lage des Vorformlings, wobei die Ringdüse fluidisch mit dem Masseeingang verbunden ist, und ein äußeres Düsenelement und ein inneres Düsenelement auf, die koaxial zueinander angeordnet sind und einen die Ringdüse bildenden Ringspalt bilden, wobei zumindest eines der Düsenelemente entlang einer Verstellachse des jeweiligen Extrusionskopfes zum Verstellen der Spaltbreite des Ringspalts verstellbar ist. Der Mehrfachextrusionskopf umfasst ferner ein Verstellelement, das entlang einer Längsachsen des Mehrfachextrusionskopfes verstellbar ist und das mit den verstellbaren Düsenelementen der Extrusionsköpfe verbunden ist.

Ein solcher Mehrfachextrusionskopf ist zum Beispiel aus der DE 10 2007 030 677 A1 bekannt. Der dort beschriebene Mehrfachextrusionskopf dient dazu, mehrere in mindestens zwei parallelen Reihen angeordnete Extrusionsköpfe ausgehend von einem mit einem Extruder verbundenen Masseeingang zu versorgen. Die Extrusionsköpfe sind sowohl hinter- als auch nebeneinander angeordnet.

Aus der WO 2007/115921 A1 ist ein Mehrfachextrusionskopf mit einem elektrisch betätigbaren Aktuator zum Verändern der Dicke der Vorformlinge während der Extrusion bekannt, wobei der Innenquerschnitt der Ausstoßöffnungen des Extrusionskopfes verändert wird. Die für die Änderung des Innenquerschnitts verwendeten Elemente sind über Spürstangen mit einem gemeinsamen Querträger verbunden, der durch Stützsäulen während der vertikalen Bewegungen geführt wird. Der Querträger wird mittels mechanischer Systeme angehoben und abgesenkt.

Aus der JP 51-150267 U1 ist ein Mehrfachextrusionskopf mit einer hydraulischen Kippsicherung bekannt. Die WO 2007/115921 A1 offenbart einen Mehrfachextrusionskopf mit einer Vielzahl langer Führungssäulen.

Das Verstellelement verstellt hierbei den Ringspalt aller Extrusionsköpfe. Hierzu ist das Verstellelement über Linearführungen, zum Beispiel mit Führungsstangen bzw. Führungssäulen und entlang der Führungsstangen bzw. Führungssäulen verschiebbare Kugelbuchsen herkömmlicher Art, linear entlang der Längsachse des Mehrfachextrusionskopfes verstellbar geführt. Unterschiedliche Druckverhältnisse in den Massekanälen innerhalb der Extrusionsköpfe führen dazu, dass die Gegenkraft, die durch die Druckverhältnisse innerhalb der Massekanäle der Extrusionsköpfe entsteht, entgegen der Verstellkraft, die von dem Antrieb auf das Verstellelement ausgeübt wird, derart voneinander abweiche, dass das Verstellelement gegenüber dem Basisgestellt, also gegenüber der Längsachse, verkippt. Dies kann zu einem erhöhten Verschleiß bis hin zum Bruch einzelner Komponenten führen.

Aufgabe der vorliegenden Erfindung ist es, einen Mehrfachextrusionskopf bereit zu stellen, der sicherer gegen Verschleiß und Bruch ausgebildet ist.

Die Aufgabe wird durch einen Mehrfachextrusionskopf zum Herstellen von Vorformlingen aus thermoplastischem Kunststoff gelöst, ein ortsfest angeordnetes Basisgestell und mehrere Extrusionsköpfe, die am Basisgestell angeordnet sind, umfasst. Jeder der mehreren Extrusionsköpfe weist einen Masseeingang für einen von einem Extruder geförderten Materialstrom aus plastifiziertem Kunststoff, eine Ringdüse zum Bilden einer schlauchförmigen Lage des Vorformlings, wobei die Ringdüse fluidisch mit dem Masseeingang verbunden ist, und ein äußeres Düsenelement und ein inneres Düsenelement auf, die koaxial zueinander angeordnet sind und einen die Ringdüse bildenden Ringspalt bilden, wobei zumindest eines der Düsenelemente entlang einer Verstellachse des jeweiligen Extrusionskopfes zum Verstellen der Spaltbreite des Ringspalts verstellbar ist. Der Mehrfachextrusionskopf umfasst ferner ein Verstellelement, das entlang einer Längsachsen des Mehrfachextrusionskopfes verstellbar ist und das mit den verstellbaren Düsenelementen der Extrusionsköpfe verbunden ist. Ferner weist der Mehrfachextrusionskopf mehrere Federstützen auf, die zwischen dem Basisgestell und dem Verstellelement angeordnet sind und die sich vorgespannt gegen das Basisgestell und das Verstellelement abstützen, wobei die Federstützen jeweils ein erstes Stützelement und ein zweites Stützelement aufweisen, die axial zueinander verstellbar sind, und wobei die Federstützen jeweils Federmittel aufweisen, die zwischen dem ersten Stützelement und dem zweiten Stützelement an geordnet sind.

Die Federstützen beaufschlagen das Verstellelement somit in einer Beaufschlagungsrichtung an mehreren Stellen mit Kraft. Diese an mehreren Stellen angreifenden Kräfte stabilisieren das Verstellelement gegen Verkippen.

Das Basisgestell kann in einer beispielhaften Ausführungsform eine Basisplatte aufweisen, an der die Extrusionsköpfe befestigt sind. Ferner kann das Verstellelement eine Verstellplatte aufweisen, die gegenüber dem Basisgestell axial geführt ist. Zwischen der Basisplatte und der Verstellplatte sind bei diesem Ausführungsbeispiel die Federstützen angeordnet und gegen diese abgestützt.

Der Antrieb kann ein Antriebselement aufweisen, das entlang der Längsachse verstellbar ist und das mit dem das Verstellelement verbunden ist.

Hierbei können die Federstützten parallel zur vom Antrieb definierten Längsachse verstellbar angeordnet sind. Somit stützen die Federstützen das Verstellelement seitlich von Antrieb ab und stabilisieren dieses. Um eine möglichst gute Abstützung gegen Verkippen zu gewährleisten, können die Federstützen möglichst weit voneinander beabstandet angeordnet sein.

Bei einem Ausführungsbeispiel sind die Federstützen mit dem Basisgestell, insbesondere mit der Basisplatte des Basisgestells, fest verbunden und zum Verstellelement derart beaufschlagt, dass die Federstützen lediglich in Kontakt zum Verstellelement gehalten sind, ohne mit diesen verbunden zu sein. Somit können Winkelabweichungen ausgeglichen werden. Denkbar ist selbstverständlich auch eine umgekehrte Anordnung, bei der die Federstützen mit dem Verstellelement verbunden sind und gegen die Basisplatte in Kontakt beaufschlagt sind.

Das erste Stützelement und das zweite Stützelement werden von den Federmitteln voneinander weg mit Kraft beaufschlagt, und können zum Beispiel miteinander teleskopierbar ausgebildet sein.

Um eine kompakte Bauweise zu ermöglichen, können die Federmittel ein Tellerfederpaket umfassen.

In einem Ausführungsbeispiel können die Federmittel das Tellerfederpaket platzsparend in einem zylindrischen Aufnahmeraum des ersten Stützelements aufgenommen sein. Grundsätzlich ist es auch möglich, den Aufnahmeraum im zweiten Stützelement anzuordnen.

In dem Aufnahmeraum kann ein Aufnahmedorn angeordnet sein, auf den die Federmittel, insbesondere wenn diese ein Tellerfederpaket aufweisen, aufgesteckt sind. Die Federmittel, und insbesondere die einzelnen Tellerfedern des Tellerfederpakets, sind somit zentriert.

Das zweite Stützelement kann einen Zylinderraum aufweisen, der in Richtung zum ersten Stützelement offen ist und das erste Stützelement teilweise aufnimmt. Somit sind die Federmittel nach außen hin abgekapselt und vor äußeren Einflüssen geschützt.

Zum Befestigen der Federstütze kann das erste Stützelement einen Gewindezapfen aufweisen, der auf einer vom zweiten Stützelement abgewandten Seite des ersten Stützelements angeordnet ist und der in eine Gewindebohrung des Basisgestells, insbesondere der Basisplatte, eingeschraubt ist. Denkbar ist hier auch, dass das zweite Stützelement den Gewindezapfen aufweist. Ferner kann der Gewindezapfen auch in eine Gewindebohrung des Verstellelements eingeschraubt sein.

Bei der Ausführungsform mit Gewindezapfen am ersten Stützelement kann das zweite Stützelement eine Stützfläche bilden, mit der das zweite Stützelement gegen das Verstellelement beaufschlagt ist. Bei einer Ausführungsform mit Gewindezapfen am zweiten Stützelement ist das erste Stützelement mit der Stützfläche versehen.

Die Stützfläche kann Teil eines Stützkopfes sein, wobei der Stützkopf axial verstellbar befestig ist. Durch die axiale Verstellbarkeit des Stützkopfes kann die Länge der Federstütze in einer maximal eingefahrenen oder maximal ausgefahrenen Position verstellt werden. Hierdurch lässt sich die Vorspannung, mit der die Federstützte zwischen der Basisplatte und dem Verstellelement eingespannt ist, einstellen.

Eine beispielhafte Ausführungsform ist in den Zeichnungen näher erläutern und wird im Folgenden beschrieben. Hierin zeigen:
- Figur 1: eine Seitenansicht einer Ausführungsform eines Mehrfachextrusionskopfes,
- Figur 2: eine Seitenansicht der Verstellplatte und der Basisplatte des Mehrfachextrusionskopfes gemäß Figur 1 mit dazwischen angeordneten Federstützen in vergrößerter Ansicht,
- Figur 3: eine vergrößerte Ansicht des ersten Extrusionskopfes des Mehrfachextrusionskopfes gemäß Figur 1 im Bereich der Ringdüse im Längsschnitt,
- Figur 4: einen Längsschnitt der ersten Federstütze des Mehrfachextrusionskopfes gemäß Figur 1 in einer ausgefahrenen Position und
- Figur 5: einen Längsschnitt der ersten Federstütze gemäß Figur 4 in einer eingefahrenen Position.

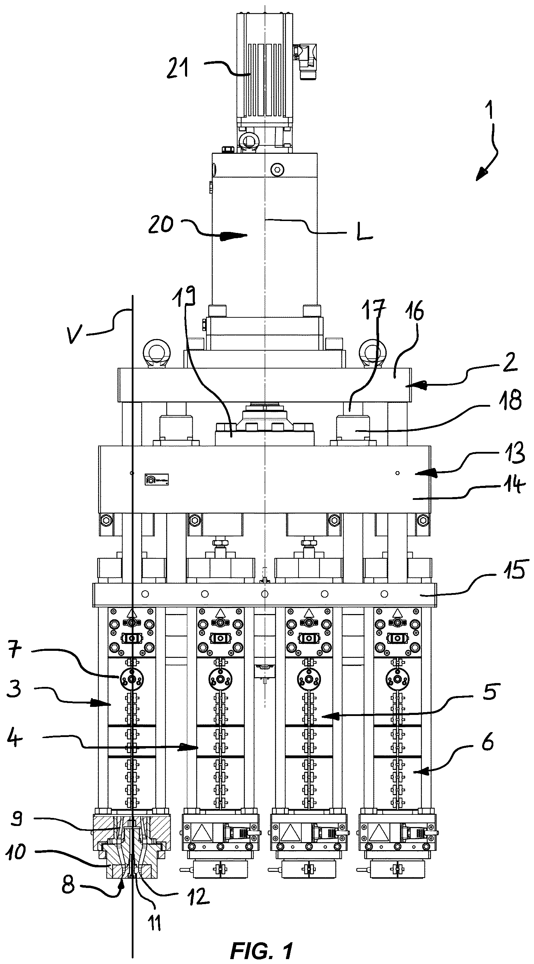

Die Figuren 1 bis 3 zeigen einen erfindungsgemäßen Extrusionskopf 1 in unterschiedlichen Ansichten und werden im Folgenden zusammen beschrieben.

Der Mehrfachextrusionskopf 1 weist ein Basisgestell 2 auf, das ortsfest angeordnet ist. An dem Basisgestell 2 sind vier Extrusionsköpfe, nämlich ein erster Extrusionskopf 3, ein zweiter Extrusionskopf 4, ein dritter Extrusionskopf 5 und ein vierter Extrusionskopf 6, befestigt. Der Mehrfachextrusionskopf 1 weist eine Längsachse L auf, wobei die Extrusionsköpfe 3, 4, 5, 6 nebeneinander quer zur Längsachse L in einer Reihe angeordnet sind und sich parallel zur Längsachse L von dem Basisgestell 2, in der gezeigten Darstellung vertikal nach unten, erstrecken. Grundsätzlich kann der Mehrfachextrusionskopf 1 jedoch auch in einer anderen Lage verwendet werden, zum Beispiel in einer Lage, in der die Längsachse L nicht vertikal, wie im vorliegenden Ausführungsbeispiel, sondern horizontal angeordnet ist.

Die Extrusionsköpfe 3, 4, 5, 6 sind identisch aufgebaut, wobei im Folgenden exemplarisch der erste Extrusionskopf 3 repräsentativ auch für die anderen Extrusionsköpfe 4, 5, 6 beschrieben wird.

Der erste Extrusionskopf 3 weist einen Masseeingang 7 auf, der mit einem hier nicht dargestellten Extruder verbunden wird, so dass ein Materialstrom aus plastifiziertem Kunststoff dem ersten Extrusionskopf 3 zugeführt werden kann.

Die Masseeingänge 7 aller Extrusionsköpfe 3, 4, 5, 6 können über eine Verteileranordnung mit einem gemeinsamen Extruder verbunden sein. Denkbar ist auch, dass jeder Extrusionskopf 3, 4, 5, 6 von einem separaten Extruder gespeist wird.

In dem ersten Extrusionskopf 3 ist ein Massekanal 9 angeordnet, der den Masseeingang 7 fluidisch mit einer Ringdüse 8 verbindet, so dass der Materialstrom zur Ringdüse 8 geleitet wird und dort aus einem von der Ringdüse 8 gebildeten Ringspalt 12 schlauchförmig austritt. Somit wird ein schlauchförmiger Vorformling gebildet.

Im vorliegenden Fall ist genau eine Ringdüse 8 mit einem Ringspalt 12 vorhanden. Somit wird ein einlagiger Vorformling hergestellt. Es ist jedoch auch möglich, dass der erste Extrusionskopf 3 mehrere Masseeingänge aufweist, die mit jeweils einem separaten Extruder verbunden sind, wobei die Massekanäle über verschiedene Massekanäle mit mehreren Ringdüsen verbunden sind. Somit ließen sich mehrlagige schlauchförmige Vorformlinge herstellen. Hierbei ist zudem möglich, dass einer der Ringspalte innerhalb des Extrusionskopfes angeordnet ist, so dass die verschiedenen Lagen innerhalb des Extrusionskopfes zueinander geführt werden und gemeinsam durch eine weitere Ringdüse ausgestoßen werden.

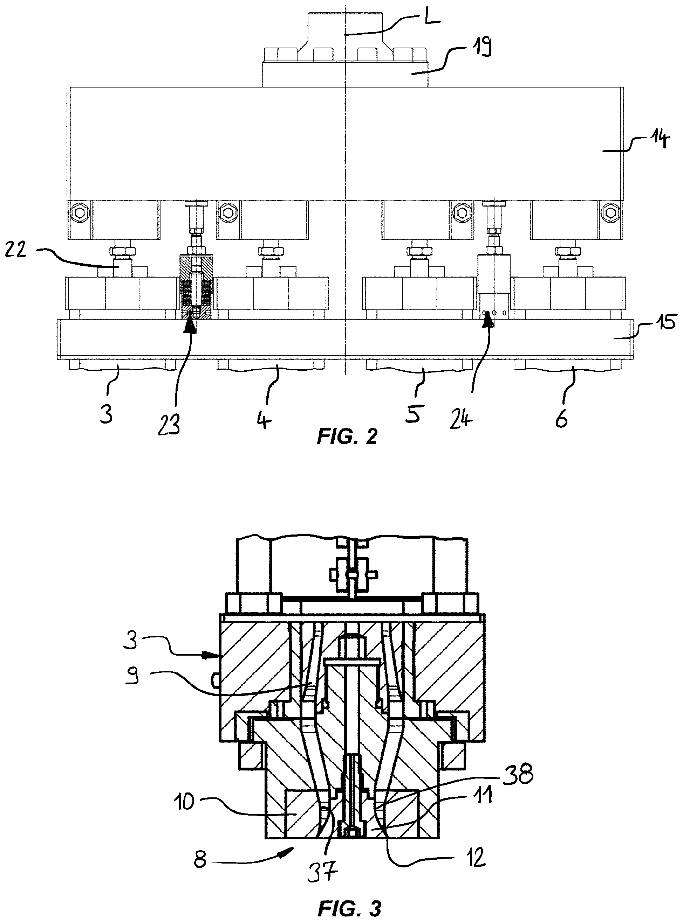

Die Ringdüse 8 weist ein äußeres Düsenelement 10 und ein inneres Düsenelement 11 auf, zwischen denen der Ringspalt 12 gebildet ist. Im vorliegenden Ausführungsbeispiel ist das äußere Düsenelement 10 ortsfest angeordnet, wobei das innere Düsenelement 11 entlang einer Verstellachse V, die parallel zur Längsachse L des Mehrfachextrusionskopfes 1 angeordnet ist, axial verstellbar ist. Das innere Düsenelement 11 kann zwischen einer in Figur 3 dargestellten eingefahrenen Position und einer nach unten hin ausgefahrenen Position axial verstellt werden. In der eingefahrenen Position ist der Ringspalt 12 geschlossen, so dass kein plastifizierter Kunststoff austreten kann. In der nach unten ausgefahrenen Position weist der Ringspalt 12 seine größte Spaltbreite auf und ermöglicht das Ausstoßen des schlauchförmigen Materialstroms. Durch Verstellen zwischen der eingefahrenen Position und der ausgefahrenen Position lässt sich die Spaltbreite des Ringspalts 12 graduell ändern, so dass hierdurch die Wanddicke des hergestellten Vorformlings variiert werden kann.

Das äußere Düsenelement 10 weißt zum Ringspalt 12 hin eine koaxial zur Verstellachse V angeordnete Innenfläche 37 auf, die im Querschnitt gemäß Figur 3 nach innen zur Verstellachse V hin konvex geformt ist. Im Bereich des Ringspalts 12 ist die Innenfläche 37 somit derart gestaltet, dass sie sich zum Ringspalt 12 hin erweitert.

Das innere Düsenelement 11 weißt zum Ringspalt 12 hin eine koaxial zur Verstellachse V angeordnete Außenfläche 38 auf, die im Querschnitt gemäß Figur 3 bezogen auf die Verstellachse konkav geformt ist. Im Bereich des Ringspalts 12 ist die Außenfläche 38 somit derart gestaltet, dass sie sich zum Ringspalt 12 hin ebenfalls erweitert.

Ferner sind die Durchmesser des äußeren Düsenelements 10 und des inneren Düsenelements 11 an ihren axialen Enden, in Figur 3 vertikal unten, gleich groß, so dass in der eingefahrenen Stellung gemäß Figur 3, in der das äußere Düsenelement 10 und das innere Düsenelement 11 nach unten hin bündig zueinander angeordnet sind, der Ringspalt 12 geschlossen ist. Wird nun das innere Düsenelement 11 vertikal nach unten bewegt, öffnet sich der Ringspalt 12 graduell in Abhängigkeit der vertikalen Position des inneren Düsenelements 11, so dass ein schlauchförmiger Vorformling aus thermoplastischen Material ausgestoßen wird. Die Wanddicke des Vorformlings kann durch die vertikale Position des inneren Düsenelements 11 eingestellt werden.

Zum Verstellen des inneren Düsenelements 11 ist ein Verstellelement 13 mit einer Verstellplatte 14 vorgesehen. Die Verstellplatte 14 erstreckt sich quer zur Längsachse L und ist zwischen einer Basisplatte 15 des Basisgestells 2 und einer Deckplatte 16 des Basisgestells 2 angeordnet. Die Basisplatte 15 und die Deckplatte 16 sind ebenfalls quer zur Längsachse L angeordnet und über Führungssäulen 17 miteinander verbunden. Die Verstellplatte 14 weist je Führungssäule 17 eine Kugelbuchse 18 auf, die auf einer der Führungssäulen 17 sitzt und axial parallel zur Längsachse L verstellbar ist. Über die mit der Verstellplatte 14 fest verbundenen Kugelbuchsen 18 kann die Verstellplatte 14 somit zwischen der Basisplatte 15 und der Deckplatte 16 axial entlang der Längsachse L verstellt werden.

Zum Verstellen ist ein Antrieb 20 mit einem Antriebsmotor 21 vorgesehen. Der Antrieb 20 ist auf der von der Verstellplatte 14 abgewandten Seite an der Deckplatte 16 befestigt. Darüber hinaus ist der Antrieb 20 mit einem Antriebs-element 19 verbunden, welches mit der Verstellplatte 14 verbunden ist. Über den Antrieb 20 kann das Antriebselement 19 und damit die Verstellplatte 14 entlang der Längsachse L verfahren werden.

Auf der vom Antrieb 20 abgewandten Seite der Verstellplatte 14 ist die Verstellplatte 14 je Extrusionskopf 3, 4, 5, 6 mit einem Dorn 22 verbunden. Der Dorn 22 des ersten Extrusionskopfes 3 ist ferner mit dem inneren Düsenelement 11 der Ringdüse 8 verbunden. Somit kann durch Verstellen der Verstellplatte 14 über den Dorn 22 das innere Düsenelement 11 axial verstellt werden.

Im Betrieb kann es vorkommen, dass innerhalb der Massekanäle 9 der einzelnen Extrusionsköpfe 3, 4, 5, 6 unterschiedliche Drücke vorherrschen. Dies führt dazu, dass insbesondere beim Schließen der Ringdüsen 8 unterschiedliche Kräfte je Extrusionskopf 3, 4, 5, 6 erforderlich sind. In einem beispielhaften Fall, bei dem der Druck im Massekanal 9 des ersten Extrusionskopfes 3 deutlich geringer ist, als der Druck im Massekanal des vierten Extrusionskopfes 6, wird beim Schließen der Ringdüsen 8 von dem inneren Düsenelement 11 dem Antrieb ein höherer Gegendruck entgegengesetzt, als vom inneren Düsenelement 11 des ersten Extrusionskopfes 3. Dadurch kann es zu einer Verkippung der Verstellplatte 14 in der in Figur 1 dargestellten Ansicht im Uhrzeigersinn kommen. Diese Verkippung kann zu einem erhöhten Verschleiß an den Führungssäulen 19 und den Kugelbuchsen 18 führen, jedoch auch, im Extremfall, zu einem Verschleiß oder sogar Bruch der Dorne 22.

Um die Gefahr des erhöhten Verschleiß oder sogar des Bruchs zu reduzieren, sind eine erste Federstütze 23 und eine zweite Federstütze 24 zwischen der Basisplatte 15 und der Verstellplatte 14 angeordnet. Die Federstützen 23, 24 sind vorgespannt zwischen der Basisplatte 15 und der Verstellplatte 14 angeordnet und drücken diese voneinander weg. Die Federstützen 23, 24 sind zudem soweit beabstandet voneinander angeordnet, dass die Verstellplatte 14 gegen Verkippen stabilisiert ist. Im vorliegenden Ausführungsbeispiel ist der Antrieb 20 und somit die gedachte Längsachse L zentral angeordnet. Die Extrusionsköpfe 3, 4, 5, 6 sind in der in Figur 1 dargestellten Ansicht paarweise auf einer Seite der Längsachse L und spiegelsymmetrisch zur Längsachse L angeordnet. Die Federstützen 23, 24 befinden sich auf gegenüberliegenden Seiten von der Längsachse L, ebenfalls spiegelsymmetrisch zur Längsachse L angeordnet. Hierbei sind die Federstützen 23, 24 jeweils zwischen zwei der Extrusionsköpfe 3, 4, 5, 6 angeordnet. Durch die von der Längsachse L seitlich versetzte Anordnung der Federstützen 23, 24 können sie möglichen Kippmomenten entgegenwirken.

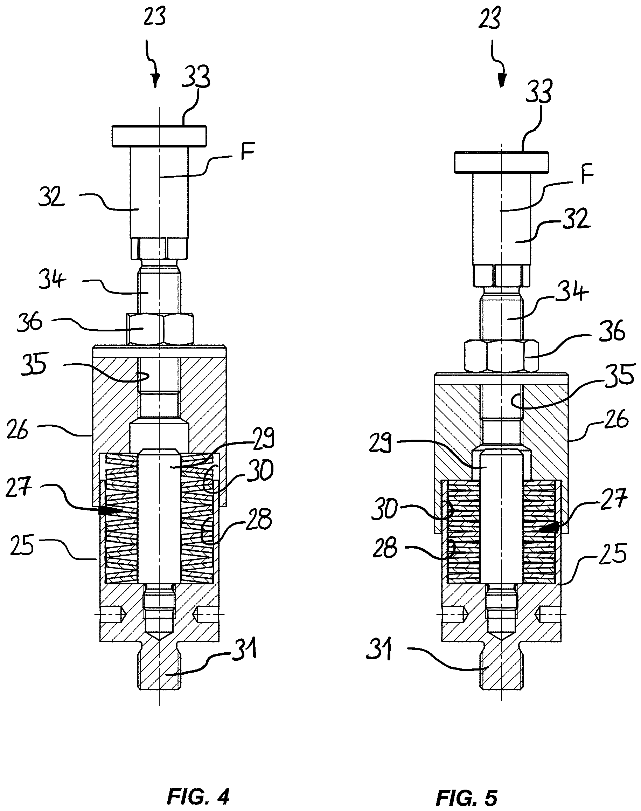

Im Folgenden wird die erste Federstütze 23 anhand der Figuren 4 und 5 näher erläutert. Beide Federstützen 23, 24 sind identisch aufgebaut.

Die erste Federstütze 23 weist ein erstes Stützelement 25 und ein zweites Stützelement 26 auf, welche durch Federmittel in Form eines Tellerfederpakets 27 voneinander weg mit Kraft beaufschlagt werden. In Figur 4 ist die erste Federstütze 23 in einer ausgefahrenen Position und in Figur 5 in einer eingefahrenen Position dargestellt. Die beiden Stützelemente 25, 26 sind entlang einer Federstützachse F zueinander axial verstellbar. Die Federstützachse F ist parallel zur Längsachse L angeordnet.

Das Tellerfederpaket 27 ist in einem zylindrischen Aufnahmeraum 28 des ersten Stützelements 25 angeordnet. In dem Aufnahmeraum 28 ist zentral ein Aufnahmedorn 29 angeordnet, der koaxial zur Federstützachse F angeordnet ist und auf den das Tellerfederpaket 27 aufgesteckt ist.

Das zweite Stützelement 26 weist einen zum ersten Stützelement 25 offenen Zylinderraum 30 auf, der teilweise das erste Stützelement 25 aufnimmt. Die beiden Stützelemente 25, 26 sind somit teleskopierbar ineinander einfahrbar. Zudem ist der Aufnahmeraum 28 nach außen hin abgeschlossen, so dass das Tellerfederpaket 27 vor äußeren Einflüssen geschützt ist. Das Tellerfederpaket 27 stützt sich hierbei einerseits gegen einen Boden des Aufnahmeraums 28 des ersten Stützelements 25 und andererseits gegen einen Boden des Zylinderraums 30 des zweiten Stützelements 26 ab und drückt diese auseinander.

Auf einer vom zweiten Stützelement 26 abgewandten Seite des ersten Stützelements 25 weist das erste Stützelement 25 einen Gewindezapfen 31 auf, der koaxial zur Federstützachse F angeordnet ist. Der Gewindezapfen 31 ist in eine (hier nicht dargestellte) Gewindebohrung der Basisplatte 15 eingeschraubt, so dass die erste Federstütze 23 fest mit der Basisplatte 15 und damit mit dem Basisgestell 2 verbunden ist.

Auf einer vom ersten Stützelement 25 abgewandten Seite weist das zweite Stützelement 26 einen Stützkopf 32 auf, der eine Stützfläche 33 bildet, die in Anlage zur Verstellplatte 14 mit Kraft beaufschlagt ist. Somit wird die Verstellplatte 14 von der Basisplatte 15 weg mit Kraft beaufschlagt. Die Stützfläche 33 liegt hierbei flächig an der Verstellplatte 14 an.

Um gewisse Winkelabweichungen ausgleichen zu können, ist der Stützkopf 32 gelenkig mit einem Gewindestift 34 verbunden. Der Gewindestift 34 ist koaxial zur Federstützachse F in eine Gewindebohrung 35 des zweiten Stützelements 26 eingeschraubt. Hierbei kann der Gewindestift 34 unterschiedlich tief in die Gewindebohrung 35 eingeschraubt werden, so dass der Abstand der Stützfläche 33 zum zweiten Stützelement 26 eingestellt werden kann. Hierdurch lässt sich die Vorspannung der ersten Federstütze 23 zwischen der Basisplatte 15 und der Verstellplatte 14 justieren. Zum Sichern der Position ist eine Sicherungsmutter 36 auf den Gewindestift 34 aufgeschraubt, die gegen das zweite Stützelement 25 gekontert werden kann.

### Bezugszeichenliste

- 1: Mehrfachextrusionskopf
- 2: Basisgestell
- 3: erster Extrusionskopf
- 4: zweiter Extrusionskopf
- 5: dritter Extrusionskopf
- 6: vierter Extrusionskopf
- 7: Masseeingang
- 8: Ringdüse
- 9: Massekanal
- 10: äußeres Düsenelement
- 11: inneres Düsenelement
- 12: Ringspalt
- 13: Verstellelement
- 14: Verstellplatte
- 15: Basisplatte
- 16: Deckplatte
- 17: Führungssäule
- 18: Kugelbuchse
- 19: Antriebselement
- 20: Antrieb
- 21: Antriebsmotor
- 22: Dorn
- 23: erste Federstütze
- 24: zweite Federstütze
- 25: erstes Stützelement
- 26: zweites Stützelement
- 27: Tellerfederpaket
- 28: Aufnahmeraum
- 29: Aufnahmedorn
- 30: Zylinderraum
- 31: Gewindezapfen
- 32: Stützkopf
- 33: Stützfläche
- 34: Gewindestift
- 35: Gewindebohrung
- 36: Sicherungsmutter
- 37: Innenfläche
- 38: Außenfläche

- L: Längsachse
- F: Federstützachse
- V: Verstellachse

## Patentansprüche

1. Mehrfachextrusionskopf (1) zum Herstellen von Vorformlingen aus thermoplastischem Kunststoff umfassend
ein ortsfest angeordnetes Basisgestell (2),
mehrere Extrusionsköpfe (3, 4, 5, 6), die am Basisgestell (2) angeordnet sind, wobei jeder Extrusionskopf (3, 4, 5, 6) folgendes aufweist:
- einen Masseeingang (7) für einen von einem Extruder geförderten Materialstrom aus plastifiziertem Kunststoff,
- eine Ringdüse (8) zum Bilden einer schlauchförmigen Lage des Vorformlings, wobei die Ringdüse (8) fluidisch mit dem Masseeingang (7) verbunden ist, und
- ein äußeres Düsenelement (10) und ein inneres Düsenelement (11), die koaxial zueinander angeordnet sind und einen die Ringdüse (8) bildenden Ringspalt (12) bilden, wobei zumindest eines der Düsenelemente (10, 11) entlang einer Verstellachse (V) des jeweiligen Extrusionskopfes (3, 4, 5, 6) zum Verstellen der Spaltbreite des Ringspalts (12) verstellbar ist, sowie ein Verstellelement (13), das entlang einer Längsachsen (L) des Mehrfachextrusionskopfes (1) verstellbar ist und das mit den verstellbaren Düsenelementen (10,11) der Extrusionsköpfe (3, 4, 5, 6) verbunden ist, **gekennzeichnet durch**
mehrere Federstützen (23, 24), die zwischen dem Basisgestell (2) und dem Verstellelement (13) angeordnet sind und die sich vorgespannt gegen das Basisgestell (2) und das Verstellelement (13) abstützen, wobei die Federstützen (23, 24) jeweils ein erstes Stützelement (25) und ein zweites Stützelement (26) aufweisen, die axial zueinander verstellbar sind, und
wobei die Federstützen (23, 24) jeweils Federmittel (27) aufweisen, die zwischen dem ersten Stützelement (25) und dem zweiten Stützelement (26) angeordnet sind.

2. Mehrfachextrusionskopf nach Anspruch 1,
**dadurch gekennzeichnet,**
**dass** das Basisgestell (2) eine Basisplatte (15) aufweist, an der die Extrusionsköpfe (3, 4, 5, 6) befestigt sind,
**dass** das Verstellelement (13) eine Verstellplatte (14) aufweist, die gegenüber dem Basisgestell (2) axial geführt ist, und
**dass** die Federstützen (23, 24) zwischen der Basisplatte (15) und der Verstellplatte (14) angeordnet und gegen diese abgestützt sind.

3. Mehrfachextrusionskopf nach einem der Ansprüche 1 oder 2,
**dadurch gekennzeichnet,**
**dass** der Mehrfachextrusionskopf ferner einen Antrieb (20) mit einem Antriebselement (19) aufweist, wobei das Antriebselement (19) entlang der Längsachse (L) verstellbar ist und das mit dem das Verstellelement (13) verbunden ist.

4. Mehrfachextrusionskopf nach einem der Ansprüche 1 bis 3,
**dadurch gekennzeichnet,**
**dass** die Federstützten (23, 24) parallel zur Längsachse (L) verstellbar angeordnet sind.

5. Mehrfachextrusionskopf nach einem der Ansprüche 1 bis 4,
**dadurch gekennzeichnet,**
**dass** die Federstützen (23, 24) mit dem Basisgestell (2) verbunden sind und in Kontakt zum Verstellelement (13) mit Kraft beaufschlagt sind.

6. Mehrfachextrusionskopf nach Anspruch 1,
**dadurch gekennzeichnet,**
**dass** die Federmittel (27) ein Tellerfederpaket umfassen.

7. Mehrfachextrusionskopf nach einem der Ansprüche 1 oder 6,
**dadurch gekennzeichnet,**
**dass** das erste Stützelement (25) einen zylindrischen Aufnahmeraum (28) aufweist, in dem die Federmittel (27) aufgenommen ist.

8. Mehrfachextrusionskopf nach Anspruch 7,
**dadurch gekennzeichnet,**
**dass** in dem Aufnahmeraum (28) ein Aufnahmedorn (29) angeordnet ist, auf dem die Federmittel (27) sitzen.

9. Mehrfachextrusionskopf nach einem der Ansprüche 1 oder 6 bis 9,
**dadurch gekennzeichnet,**
**dass** das zweite Stützelement (26) einen Zylinderraum (30) aufweist, der in Richtung zum ersten Stützelement (25) offen ist und das erste Stützelement (25) teilweise aufnimmt.

10. Mehrfachextrusionskopf nach einem der Ansprüche 1 oder 6 bis 9,
**dadurch gekennzeichnet,**
**dass** das erste Stützelement (25) einen Gewindezapfen (31) aufweist, der auf einer vom zweiten Stützelement (26) abgewandten Seite des ersten Stützelements (25) angeordnet ist und der in eine Gewindebohrung (35) des Basisgestells (2) eingeschraubt ist.

11. Mehrfachextrusionskopf nach einem der Ansprüche 1 oder 6 bis 10,
**dadurch gekennzeichnet,**
**dass** das zweite Stützelement (26) eine Stützfläche (33) aufweist, mit der das zweite Stützelement (26) gegen das Verstellelement (13) beaufschlagt ist.

12. Mehrfachextrusionskopf nach Anspruch 11,
**dadurch gekennzeichnet,**
**dass** die Stützfläche (33) Teil eines Stützkopfes ist (32), wobei der Stützkopf (32) axial verstellbar ist.

## Claims

1. Multiple extrusion head (1) for manufacturing parisons from thermoplastic material, comprising
a stationary arranged base frame (2),
a multiple of extrusion heads (3, 4, 5, 6), arranged on the base frame (2), wherein each extrusion head (3, 4, 5, 6) has the following:
- a material inlet (7) for a material flow of plasticised material delivered by an extruder,
- a ring die (8) for forming a tube-like layer of the parison, wherein the ring die (8) is connected in fluid connection to the material inlet (7), and
- an outer die element (10) and an inner die element (11), which are arranged coaxially to each other and form an annular gap (12) forming the ring die (8), wherein at least one of the die elements (10, 11) is displaceable along an adjustment axis (V) of the respective extrusion head (3, 4, 5, 6) for adjusting the gap width of the annular gap (12), as well as
an adjustment element (13), which is displaceable along a longitudinal axis (L) of the multiple extrusion head (1) and which is connected to the displaceable die elements (10, 11) of the extrusion heads (3, 4, 5, 6),
**characterised in**
several spring supports (23, 24), arranged between the base frame (2) and the adjustment element (13) and supported in a biased manner against the base frame (2) and the adjustment element (13),
wherein the spring supports (23, 24) each have a first support element (25) and a second support element (26), which are displaceably axially to each other, and
wherein the spring supports (23, 24) each have a spring means (27), arranged between the first support element (25) and the second support element (26).

2. Multiple extrusion head according to claim 1,
**characterised in**
**that** the base frame (2) has a base plate (15), on which the extrusion heads (3, 4, 5, 6) are attached,
**that** the adjustment element (13) has an adjustment plate (14), axially guided relative to the base frame (2), and
**that** the spring supports (23, 24) are arranged between the base plate (15) and the adjustment plate (14) and are supported against the same.

3. Multiple extrusion head according to anyone of claims 1 or 2,
**characterised in**
**that** the multiple extrusion head further comprises a drive (20) with a drive element (19), wherein the drive element (19) is displaceable along the longitudinal axis (L) and connected to the adjustment element (13).

4. Multiple extrusion head according to anyone of claims 1 or 3,
**characterised in**
**that** the spring supports (23, 24) are arranged displaceably parallel to the longitudinal axis (L).

5. Multiple extrusion head according to anyone of claims 1 or 4,
**characterised in**
**that** the spring supports (23, 24) are connected to the base frame (2) and are biased in contact to the adjustment element (13).

6. Multiple extrusion head according to claim 1,
**characterised in**
**that** the spring means (27) comprise Belleville springs.

7. Multiple extrusion head according to anyone of claims 1 or 6,
**characterised in**
**that** the first support element (25) has a cylindrical accommodation chamber (28) accommodating the spring unit (27).

8. Multiple extrusion head according to claim 7,
**characterised in**
**that** an accommodation mandrel (29) is arranged in the accommodation chamber (28) wherein the accommodation mandrel (29) receives the spring means (27).

9. Multiple extrusion head according to anyone of claims 1 or 6 to 8,
**characterised in**
**that** the second support element (26) has a cylindrical chamber (30), which is open in the direction towards the first support element (25) and which partially accommodates the first support element (25).

10. Multiple extrusion head according to anyone of claims 1 or 6 to 9,
**characterised in**
**that** the first support element (25) has a threaded trunnion (31), which is arranged on a side of the first support element (25), facing away from the second support element (26), and which is screwed into a threaded bore (35) of the base frame (2).

11. Multiple extrusion head according to anyone of claims 1 or 6 to 10,
**characterised in**
**that** the second support element (26) has a support face (33), with which the second support element (26) acts on the adjustment element (13).

12. Multiple extrusion head according to claim 11,
**characterised in**
**that** the support face (33) is part of a support head (32), wherein the support head (32) is axially displaceable.

## Revendications

1. Tête de multi-extrusion (1) pour la fabrication d'ébauches préformées en matière thermoplastique comprenant
un châssis de base (2) disposé de façon fixe,
plusieurs têtes d'extrusion (3, 4, 5, 6), qui sont disposées sur le châssis de base (2),
sachant que chaque tête d'extrusion (3, 4, 5, 6) comporte les éléments suivants :
- une entrée de masse (7) pour un flux de matériau de matière plastique plastifiée transporté par une extrudeuse,
- une filière annulaire (8) pour former une couche tubulaire de l'ébauche préformée, sachant que la filière annulaire (8) est reliée fluidiquement à l'entrée de masse (7),
- un élément de filière extérieur (10) et un élément de filière intérieur (11), qui sont disposés coaxialement l'un par rapport à l'autre et forment un intervalle annulaire (12) formant la filière annulaire (8), sachant qu'au moins un des éléments de filière (10, 11) peut être réglé le long d'un axe de réglage (V) de la tête d'extrusion respective (3, 4, 5, 6) pour régler la largeur d'intervalle de l'intervalle annulaire (12), ainsi qu'un élément de réglage (13), qui peut être réglé le long d'un axe longitudinal (L) de la tête de multi-extrusion (1) et est relié à l'élément de filière réglable (10, 11) des têtes d'extrusion (3, 4, 5, 6),
**caractérisée en ce que**
plusieurs supports de ressort (23, 24), qui sont disposés entre le châssis de base (2) et l'élément de réglage (13) et qui s'appuient précontraints contre le châssis de base (2) et supportent l'élément de réglage (13), sachant que les supports de ressort (23, 24) comportent respectivement un premier élément de support (25) et un deuxième élément de support (26), qui peuvent être réglés axialement l'un par rapport à l'autre, et sachant que les supports de ressort (23, 24) comportent respectivement des moyens faisant ressort (27), qui sont disposés entre le premier élément de support (25) et le deuxième élément de support (26).

2. Tête de multi-extrusion selon la revendication 1, **caractérisée en ce que**
le châssis de base (2) comporte une plaque de base (15) sur laquelle sont fixées les têtes d'extrusion (3, 4, 5, 6),
**en ce que** l'élément de réglage (13) comporte une plaque de réglage (14), qui est axialement guidée par rapport au châssis de base (2), et
**en ce que** les supports de ressort (23, 24) sont disposés entre la plaque de base (15) et la plaque de réglage (14) et sont appuyés contre celle-ci.

3. Tête de multi-extrusion selon l'une quelconque des revendications 1 ou 2,
**caractérisée en ce que**
la tête de multi-extrusion comporte en plus un système d'entraînement (20) avec un élément d'entraînement (19), sachant que l'élément d'entraînement (19) peut être réglé le long de l'axe longitudinal (L) et **en ce que** l'élément de réglage (13) est relié à celui-ci.

4. Tête de multi-extrusion selon l'une quelconque des revendications 1 à 3,
**caractérisée en ce que**
les supports de ressort (23, 24) sont disposés pouvant être réglés parallèlement à l'axe longitudinal (L).

5. Tête de multi-extrusion selon l'une quelconque des revendications 1 à 4,
**caractérisée en ce que**
les supports de ressort (23, 24) sont reliés au châssis de base (2) et sont appliqués avec force en contact avec l'élément de réglage (13).

6. Tête de multi-extrusion selon la revendication 1,
**caractérisée en ce que**
les moyens faisant ressort (27) comprennent un ensemble de ressorts Belleville.

7. Tête de multi-extrusion selon l'une quelconque des revendications 1 ou 6,
**caractérisé en ce que**
le premier élément de support (25) comporte un espace de logement cylindrique (28) dans lequel sont logés les moyens faisant ressort (27).

8. Tête de multi-extrusion selon la revendication 7,
**caractérisée en ce qu'**
un mandrin de réception (29) est disposé dans l'espace de logement (28) sur lequel viennent se placer les moyens faisant ressort (27).

9. Tête de multi-extrusion selon l'une quelconque des revendications 1 ou 6 à 8,
**caractérisée en ce que**
le deuxième élément de support (26) comporte un espace cylindrique (30), qui est ouvert en direction du premier élément de support (25) et loge en partie le premier élément de support (25).

10. Tête de multi-extrusion selon l'une quelconque des revendications 1 ou 6 à 9,
**caractérisée en ce que**
le premier élément de support (25) comporte un embout fileté (31), qui est disposé sur un coté du premier élément de support (25) opposé au deuxième élément de support (26) et qui est vissé dans un trou fileté (35) du châssis de base (2).

11. Tête de multi-extrusion selon l'une quelconque des revendications 1 ou 6 à 10,
**caractérisée en ce que**
le deuxième élément de support (26) comporte une surface d'appui (33) avec laquelle le deuxième élément de support (26) est appliqué contre l'élément de réglage (13) .

12. Tête de multi-extrusion selon la revendication 11, **caractérisée en ce que**
la surface d'appui (33) fait partie d'une tête de support (32), sachant que la tête de support (32) peut être réglée axialement.
